# EUROPÄISCHE PATENTSCHRIFT

(11) **EP 2 030 846 B1**
(45) Veröffentlichungstag und Bekanntmachung des Hinweises auf die Patenterteilung: **27.11.2013**
(21) Anmeldenummer: 08015106.1
(22) Anmeldetag: 27.08.2008
(51) Int. Cl.: B60R 16/037

(54) **Speichereinheit mit Daten, welche mit einer Einstellung wenigstens einer Funktionseinheit eines Kraftfahrzeugs korreliert sind, Kraftfahrzeug, System und Verfahren zum Einstellen wenigstens einer Funktionseinheit eines Kraftfahrzeugs**
Storage unit with data that can be correlated to the configuration of at least one function unit of a motor vehicle, motor vehicle, system and method for configuring at least one function unit of a motor vehicle
Unité de stockage comportant des données corrélées à un réglage d'au moins une unité fonctionnelle d'un véhicule automobile, véhicule automobile, système et procédé de réglage d'au moins une unité fonctionnelle d'un véhicule automobile

(30) Priorität: 29.08.2007 DE 102007040686
(43) Veröffentlichungstag der Anmeldung: 04.03.2009
(73) Patentinhaber: Audi AG, 85045 Ingolstadt (DE)
(72) Erfinder: Bonschab, Markus, 85122 Hitzhofen (DE); Wörmann, Wolfgang, 85304 Ilmmünster (DE); Fuchs, Franz, 85301 Geisenhausen (DE); Warschat, Ulf, 85652 Pliening (DE)
(74) Vertreter: Thielmann, Frank

(56) Entgegenhaltungen:
- EP-A2- 1 013 510
- WO-A1-2005/068259
- DE-A1- 10 133 383
- DE-A1- 19 753 086
- DE-A1-102005 018 078
- DE-A1-102005 026 849

## Beschreibung

Die Erfindung betrifft ein Kraftfahrzeug und ein System zum Einstellen wenigstens einer Funktionseinheit eines Kraftfahrzeugs sowie ein Verfahren zum Einstellen wenigstens einer Funktionseinheit eines Kraftfahrzeugs.

Die WO 2005/068259 A1 beschreibt ein Verfahren und ein System zum Übertragen von persönenbezogenen Einstellungen eines ersten Fahrzeugs auf ein zweites Fahrzeug, etwa wenn der Fahrer das Fahrzeug wechselt. Die Personalisierungsdaten umfassen hierbei Daten für Einstellungen im Fahrzeug, die von einer das Fahrzeug nutzenden Person gemacht werden können, beispielsweise die Sitzeinstellung, die Radiolautstärke, Navigationsziellisten und dergleichen. Daten, welche die Einstellungen im ersten Fahrzeug angeben, bewirken dann im Zielfahrzeug, also bei einem Wechsel des Fahrzeugs, Einstellungen, die der Fahrer oder die Mitfahrer typischerweise erwarten. Um ein Austauschformat der Daten bereitzustellen, kann ein absoluter Einstellwert des ersten Fahrzeugs in einen Relativwert umgerechnet werden, welcher als prozentualer Wert ausgedrückt ist. Die Einstellwerte aus dem ersten Fahrzeug werden so in ein fahrzeugunabhängiges Format konvertiert.

Die DE 197 53 086 A1 beschreibt ein Personalisierungsmodul für ein Kraftfahrzeug, mittels welchem Einstellungen von Sitzen, eines Rückspiegels, eines Lenkrads, eines Schaltverhaltens und dergleichen vorgenommen werden, wobei diese Einstellungen in einem Fahrzeugschlüssel abgespeichert sind. Das Vornehmen der Einstellungen geschieht bereits, sobald sich der Fahrer dem Fahrzeug nähert oder auf dem Fahrersitz Platz nimmt. Wenn sich mehrere Personen mit jeweiligen Personalisierungsmodulen dem Fahrzeug nähern, so erhält das jeweilige Modul vorrangigen Status, welches bei Annäherung an das Fahrzeug als erstes identifiziert wird oder welches sich durch eine größte Sendefeldstärke auszeichnet.

Die DE 10 2005 018 078 A1 beschreibt eine Speichereinrichtung für ein Nutzerprofil mehrerer Funktionseinheiten in einem Kraftfahrzeug. Die Speichereinrichtung kann an eine in einem Kraftfahrzeug angeordnete Fahrerinformationseinrichtung angeschlossen werden. Daraufhin wird das in der Speichereinrichtung gespeicherte Nutzerprofil übertragen. Um ein Nutzerprofil auszuwählen, kann der Fahrer unterschiedliche Speicherbereiche der Speichereinrichtung auswählen. Alternativ kann er sich identifizieren, sodass ein ihm zugeordnetes Nutzerprofil an die Fahrerinformationseinrichtung entsprechend der Identität des Nutzers übertragen wird.

Die DE 10 2005 026 849 A1 beschreibt ein externes Speichermedium für nutzerindividuelle Daten, welche über eine Schnittstelle aus einem Steuergerät eines Fahrzeugs ausgelesen werden können. Über das externe Speichermedium lassen sich die nutzerindividuellen Daten mitnehmen und in anderen Fahrzeugen aufspielen.

Die DE 101 33 383 A1 beschreibt ein System zum Einstellen von Funktionseinheiten eines Kraftfahrzeugs, wobei eine mobile Speichereinheit zum Senden und Empfangen von Daten und zum Speichern von Daten ausgelegt ist, welche mit Einstellungen der Funktionseinheiten des Kraftfahrzeugs korreliert sind. Die Daten der mobilen Speichereinheit können von einer dem Kraftfahrzeug zugeordneten Datenempfangseinheit erfasst werden und an eine dem Kraftfahrzeug zugeordnete Steuereinheit übertragen werden. Die Steuereinheit nimmt dann das Einstellen der Funktionseinheiten des Kraftfahrzeugs vor. Ein Senden und Empfangen von Daten mittels der mobilen Speichereinheit ist hierbei durch ein Aktivierungssignal auslösbar, welches an die mobile Speichereinheit übertragbar ist. Die mobile Speichereinheit ist als fahrzeugunabhängige, personenbezogene Einheit ausgebildet, beispielsweise als Chipkarte. Die Chipkarte ermöglicht somit ein Übertragen von fahrzeugunabhängigen, personenbezogenen Daten von einem Fahrzeug auf ein anderes.

Die DE 198 40 955 A1 betrifft ebenfalls eine Einstelleinrichtung für Funktionseinheiten von Kraftfahrzeugen, wobei zusätzlich eine Recheneinrichtung vorgesehen ist, in welche für einen ersten Fahrzeugtyp abgespeicherte, personenbezogene Daten einspeisbar sind. Hierbei sind mit Einstellungen der Funktionseinheiten des ersten Fahrzeugtyps korrelierende Daten mittels der Recheneinrichtung in mit Einstellungen der Funktionseinheiten eines zweiten Fahrzeugtyps korrelierende Daten überführbar. Eine Methodik beim Überführen ist in der DE 198 40 955 A1 nicht erläutert, jedoch lehrt die DE 198 40 955 A1, trotz einer unterschiedlichen absoluten Konfiguration der Funktionseinheiten in dem jeweiligen Fahrzeugtyp einem Fahrzeuginsassen in jedem Fahrzeugtyp den gleichen Komfort zu bieten, wie dies beispielsweise durch Übertragen eines absoluten Abstandes eines Fahrzeugsitzes zu einer Lenksäule ermöglicht wäre.

Aufgabe der vorliegenden Erfindung ist es, ein Kraftfahrzeug, ein System zum Einstellen wenigstens einer Funktionseinheit eines Kraftfahrzeugs und ein Verfahren zum Einstellen wenigstens einer Funktionseinheit eines Kraftfahrzeugs zu schaffen, mittels welcher bzw. mittels welchem in verbesserter Weise ein Überführen der mit der Einstellung der Funktionseinheit eines ersten Kraftfahrzeugs korrelierten Daten in mit der Einstellung der Funktionseinheit eines zweiten Kraftfahrzeugs korrelierte Daten ermöglicht ist.

Die Aufgabe wird gelöst durch ein Kraftfahrzeug mit den Merkmalen des Patentanspruchs 1, durch ein System zum Einstellen wenigstens einer Funktionseinheit eines Kraftfahrzeugs mit den Merkmalen des Patentanspruchs 6 und durch ein Verfahren mit den Merkmalen des Patentanspruchs 7. Vorteilhafte Ausgestaltungen mit zweckmäßigen Weiterbildungen der Erfindung sind in den jeweils abhängigen Patentansprüchen angegeben.

In einer Speichereinheit sind Daten abgelegt, welche mit einer Einstellung wenigstens einer Funktionseinheit eines Kraftfahrzeugs korreliert sind, wobei die Daten mittels einer Erfassungseinheit erfassbar sind, mittels der Erfassungseinheit an eine Steuereinrichtung zum Überführen der wenigstens einen Funktionseinheit in die den Daten entsprechende Einstellung übertragbar sind und wobei die mit der Einstellung der Funktionseinheit eines ersten Kraftfahrzeugs korrelierten Daten mittels einer Recheneinrichtung in die der Einstellung der Funktionseinheit eines zweiten Kraftfahrzeugs korrelierten Daten überführbar sind. Hierbei ist vorgesehen, dass die Daten in einen prozentualen Wert überführt sind, welcher aus den mit der Einstellung der wenigstens einen Funktionseinheit des ersten Kraftfahrzeugs korrelierten Daten berechnet ist. Ein Wert von 100 % entspricht hierbei einem Maximalwert eines Wertebereichs, in welchem Einstellungen der Funktionseinheit vornehmbar sind. Bei einem Verstellweg der Funktionseinheit entspricht der Wert von 100 % einer Einstellung der Funktionseinheit an einer Endposition des Verstellweges.

Dem liegt die Erkenntnis zugrunde, dass selbst bei Kraftfahrzeugen desselben Kraftfahrzeugtyps derselben Marke beispielsweise Sitzschienen zum Einstellen einer Position eines Fahrzeugsitzes in Längsrichtung des Kraftfahrzeugs unterschiedliche Abmessungen aufweisen können. Dies kann durch Abweichungen der absoluten Lage von Schweißpunkten und/oder Verschraubungspunkten, durch Toleranzen der Karosserie des Kraftfahrzeugs und/oder durch Fertigungstoleranzen bei der Fertigung der Sitzschiene bedingt sein. Diese Erkenntnis zu toleranzbedingten Unterschieden In Abmessungen von Funktionseinheiten ist des Weiteren gültig für Innen- oder Außenspiegel, Lenksäulen und dergleichen.

Durch Addition von Toleranzen können so Abweichung in den Abmessungen der Sitzschienen zweier Fahrzeuge eines Fahrzeugtyps derselben Marke auftreten, welche einen Wert von 1 cm erreichen können. Hieraus wird ersichtlich, dass Unterschiede bei Abmessungen von Funktionseinheiten unterschiedlicher Fahrzeugtypen derselben Marke von entsprechend noch größerer Bedeutung sein können

So kann die auf einen festen Bezugspunkt der Sitzschiene bezogene absolute Position des Fahrzeugsitzes in Längsrichtung in der Sitzschiene in dem ersten Kraftfahrzeug für einen Fahrzeuginsassen komfortabel sein, während dieselbe auf den festen Bezugspunkt bezogene absolute Position des Fahrzeugsitzes in Längsrichtung in dem zweiten Kraftfahrzeug unkomfortabel ist, weil sie einem Lenkrad des zweiten Kraftfahrzeugs zu nahe ist. Ebenso ist es vorstellbar, dass die auf den festen Bezugspunkt bezogene absolute Position des Fahrzeugsitzes in Längsrichtung in dem zweiten Kraftfahrzeug gar nicht einstellbar ist, weil die absoluten Abmessungen oder räumliche Anordnungen der Sitzschienen des ersten Kraftfahrzeugs und des zweiten Kraftfahrzeugs differieren. Dasselbe gilt selbstverständlich auch für eine Position des Fahrzeugsitzes in Hochrichtung bzw. für eine Neigung des Fahrzeugsitzes.

Bei den Funktionseinheiten kann es sich um den Fahrzeugsitz handeln, einen Innenspiegel, einen Außenspiegel, eine Lenksäule, eine Kopfstütze, eine Instrumentenbeleuchtung, ein Getriebe, ein Energiemanagement einer Antriebseinrichtung, eine Heiz- bzw. Klimaanlage, ein Radio, ein Autotelefon, ein Navigationssystem oder dergleichen.

Durch das Überführen der mit der Funktionseinheit des ersten Kraftfahrzeugs korrelierten Daten in einen prozentualen Wert ist ein Übertragen der Position des Fahrzeugsitzes, des Innen- und des Außenspiegels, der Lenksäule, der Kopfstützen, sowie einer Beleuchtungsintensität der Instrumentenbeleuchtung unabhängig von einer absoluten Auslegung von die Einstellung der Funktionseinheit bestimmenden Parametern auf das zweite Kraftfahrzeug ermöglicht.

Hierbei ist zum einen eine besonders hohe Positioniergenauigkeit erreichbar, zum anderen wird ein Übertragen von nicht gewünschten, möglicherweise sicherheitskritischen Positionen vermieden. Ein nicht gewünschter Zustand ist beispielsweise ein Einstellen des Fahrzeugsitzes in einer Hochrichtung, bei welcher die Kopfstütze des Fahrzeugsitzes eine Dachhaut des Kraftfahrzeugs berührt. Ein unkomfortabler oder sicherheitskritischer Zustand kann darin bestehen, dass sich der Fahrzeugsitz der Lenksäule und/oder dem Lenkrad sehr nahe befindet.

Durch das Übertragen der mit der Einstellung der Funktionseinheit korrelierten Daten in einen prozentualen Wert sind somit unterschiedliche absolute Abmessungen oder Anordnungen der Funktionseinheit zwischen dem ersten Kraftfahrzeug und dem zweiten Kraftfahrzeug ausgleichbar.

Somit ist eine Speichereinheit geschaffen, mittel welcher in verbesserter Weise ein Überführen der Daten von dem ersten Kraftfahrzeug auf das zweite Kraftfahrzeug ermöglicht ist.

In einer vorteilhaften Ausgestaltung der Speichereinheit ist vorgesehen, dass die Speichereinheit in einen Fahrzeugschlüssel für das Kraftfahrzeug integriert ist. Dadurch ist eine besonders kostengünstige Speichereinheit geschaffen. Ebenso ist eine Wahrscheinlichkeit gering, dass die Speichereinheit von einem Fahrzeuginsassen vergessen wird. Alternativ kann die Speichereinheit jedoch auch als Chipkarte oder dergleichen Datenträger ausgebildet sein.

Schließlich hat es sich als vorteilhaft gezeigt, wenn die Speichereinheit zum Speichern der mit der Einstellung der wenigstens einen Funktionseinheit korrelierten Daten in Abhängigkeit von einer Funktion des Fahrzeuginsassen ausgelegt ist. Die Speichereinheit ermöglicht somit das Speichern von Daten beispielsweise für fahrerbezogene und gleichzeitig für beifahrerbezogene Einstellungen der Funktionseinheiten, so dass eine einzige Speichereinheit dem Fahrer und dem Beifahrer ein komfortables Einstellen der Funktionseinheiten ermöglicht.

Gemäß der Erfindung weist ein Kraftfahrzeug eine Erfassungseinheit zum Erfassen und zum Übertragen von Daten einer Speichereinheit, welche mit einer Einstellung wenigstens einer Funktionseinheit des Kraftfahrzeugs korreliert sind, eine Steuereinrichtung zum Überführen der wenigstens einen Funktionseinheit in die den mittels der Fassungseinheit übertragenen Daten entsprechender Einstellungen und eine Recheneinrichtung auf, mittels welcher die mit der Einstellung der Funktionseinheit eines ersten Kraftfahrzeugs korrelierten Daten in die mit der Einstellung der Funktionseinheit eines zweiten Kraftfahrzeugs korrelierten Daten überführbar sind. Bei dem Kraftfahrzeug ist vorgesehen, dass die Recheneinrichtung zum Berechnen eines prozentualen Wertes aus den mit der Einstellung der wenigstens eine Funktionseinheit des ersten Kraftfahrzeugs korrelierten Daten ausgelegt ist.

Hierbei ist eine Erkennungseinrichtung vorgesehen, mittels welcher eine Zuordenbarkeit der auf der Speichereinheit abgelegten Daten zu einem Fahrer oder Beifahrer feststellbar ist. Dadurch ist es möglich, die Funktionseinheiten gemäß fahrerbezogenen Daten einzustellen und nicht gemäß beifahrerbezogenen Daten, wenn sowohl der Fahrer als auch der Beifahrer mit der beispielsweise in den Fahrzeugschlüssel integrierten Speichereinheit ausgestattet sind und sich beide dem Fahrzeug nähern.

Dadurch ist ein Kraftfahrzeug geschaffen, mittels welchem in verbesserter Weise ein Überführen der mit dem ersten Kraftfahrzeug korrelierten Daten in die mit dem zweiten Kraftfahrzeug korrelierten Daten ermöglicht ist.

In einer besonders vorteilhaften Ausgestaltung der Erfindung ist die Erfassungseinheit als Lese- und/oder Schreibeinrichtung für die auf der Speichereinheit, insbesondere auf einem Fahrzeugschlüssel, speicherbaren und mit der Einstellung der wenigstens einen Funktionseinheit korrelierten Daten ausgebildet. Ebenso kann als Lese- und/oder Schreibeinrichtung eine externe Lese- und Schreibeinrichtung genutzt werden, mittels welcher etwa die Daten aus dem Fahrzeugschlüssel des ersten Kraftfahrzeugs ausgelesen und auf den Fahrzeugschlüssel des zweiten Kraftfahrzeugs übertragen werden können.

So können auf besonders einfache und sichere Weise die Daten von der Speichereinheit des ersten Kraftfahrzeugs, beispielsweise von dem Fahrzeugschlüssel, auf die Speichereinheit des zweiten Kraftfahrzeugs übertragen werden. Hierfür ist die Erfassungseinheit des zweiten Kraftfahrzeugs so ausgelegt, dass sie die Speichereinheit, insbesondere den Fahrzeugschlüssel, des ersten Kraftfahrzeugs aufnehmen kann bzw. dass sie auf eine andere Art und Weise zum Erfassen der Daten von der Speichereinheit des ersten Kraftfahrzeugs in der Lage ist.

Des Weiteren ist es von Vorteil, wenn die Erfassungseinheit und/oder die Recheneinrichtung in ein elektronisches Zündschloss des Kraftfahrzeugs integriert ist. Dadurch ist ein besonders flexibles und spezifisches Übertragen der mit dem ersten Kraftfahrzeug korrelierten Daten in die mit dem zweiten Kraftfahrzeug korrelierten Daten ermöglicht.

Des Weiteren ist es von Vorteil, wenn die Recheneinrichtung in die Steuereinrichtung integriert ist. Ein Überführen des prozentualen Wertes in die mit der Einstellung der Funktionseinheit des zweiten Kraftfahrzeugs korrelierten Daten ist also in der Steuereinrichtung ermöglicht, in welcher dem zweiten Kraftfahrzeug zugeordnete Absolutwerte abgelegt sind. Dadurch ist eine besonders kompakte Bauform geschaffen.

Von besonderem Vorteil ist es weiterhin, wenn die Erfassungseinheit zum kontaktlosen Erfassen der mit der Einstellung der wenigstens einen Funktionseinheit korrelierten Daten ausgelegt ist. Dadurch ist ein auf den Fahrzeuginsassen bezogenes Einstellen der Funktionseinheiten vor einem Einsteigen in das Kraftfahrzeug ermöglicht.

Gemäß einem weiteren Aspekt der Erfindung umfasst ein System zum Einstellen wenigstens einer Funktionseinheit eines Kraftfahrzeugs eine Speichereinheit zum Speichern von Daten, welche mit einer Einstellung wenigstens einer Funktionseinheit eines Kraftfahrzeugs korreliert sind, eine Erfassungseinheit zum Erfassen und zum Übertragen der Daten, eine Steuereinrichtung zum Überführen der wenigstens einen Funktionseinheit in die mittels der Erfassungseinheit übertragenen Daten entsprechende Einstellung und eine Recheneinrichtung, mittels welcher die mit der Einstellung der Funktionseinheit eines ersten Kraftfahrzeugs korrelierten Daten in die mit der Einstellung der Funktionseinheit eines zweiten Kraftfahrzeugs korrelierten Daten überführbar sind, wobei die Recheneinrichtung zum Berechnen des prozeneine Erkennungseinrichtung, mittels welcher eine Zuordenbarkeit der auf der Speichereinheit abgelegten Daten zu einem Fahrer oder Beifahrer feststell bar ist. Dadurch ist ein System geschaffen, mittels welchem in verbesserter Weise ein Überführen der mit dem ersten Kraftfahrzeug korrelierten Daten in die mit dem zweiten Kraftfahrzeug korrelierten Daten ermöglicht ist.

Die Erfassungseinheit und/oder die Recheneinrichtung kann hierbei innerhalb des Kraftfahrzeugs als auch außerhalb des Kraftfahrzeugs angeordnet und beispielsweise bei einem Händler oder bei einer Werkstatt verfügbar sein.

Die im Zusammenhang mit der Speichereinheit, dem erfindungsgemäßen Kraftfahrzeug und dem erfindungsgemäßen System beschriebenen bevorzugten Ausführungsformen und Vorteile gelten, soweit anwendbar, auch für das erfindungsgemäße Verfahren zum Einstellen wenigstens einer Funktionseinheit eines Kraftfahrzeugs.

Weitere Vorteile, Merkmale und Einzelheiten der Erfindung ergeben sich aus der nachfolgenden Beschreibung bevorzugter Ausführungsbeispiele sowie anhand der Zeichnungen, in welchen gleiche oder funktionsgleiche Elemente mit identischen Bezugszeichen versehen sind. Dabei zeigen:
Fig.1 ein System zum Einstellen einer Funktionseinheit eines Kraftfahrzeugs;
Fig. 2 jeweils eine Sitzschiene eines ersten und eines zweiten Kraftfahrzeugs mit verschiedenen Positionen, welche unterschiedlichen Einstellungen einer Position eines Fahrzeugsitzes in einer Längsrichtung entsprechen; und
Fig. 3 ein Schaubild zum Erläutern des Verfahrens zum Übertragen von Einstellungen von Funktionseinheiten des ersten Kraftfahrzeugs auf das zweite Kraftfahrzeug.

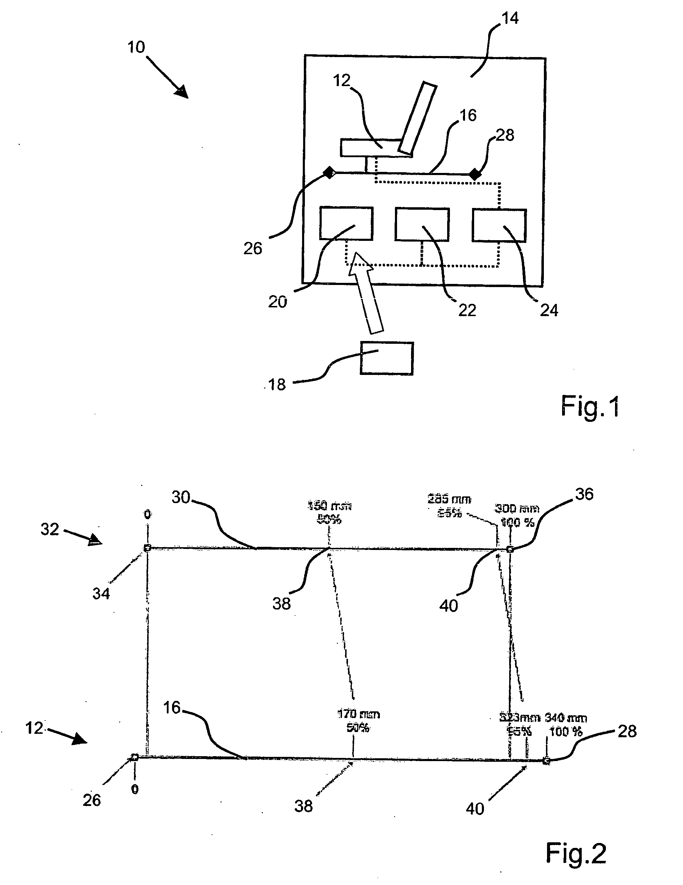

Fig. 1 zeigt ein stark schematisiertes System 10 zum Einstellen einer Funktionseinheit 12 eines ersten Kraftfahrzeugs 14. Die Funktionseinheit 12 ist vorliegend ein Fahrzeugsitz, welcher in einer Sitzschiene 16 eine einer bestimmten Einstellung in einer Längsrichtung des Fahrzeugsitzes entsprechende Position einnehmen kann. Daten, welche mit der Einstellung der Funktionseinheit 12 korreliert sind, sind in einer Speichereinheit 18 abgelegt. Die Speichereinheit 18 kann in einen Fahrzeugschlüssel des ersten Kraftfahrzeuges 14 integriert sein.

Das erste Kraftfahrzeug 14 weist eine Erfassungseinheit 20 auf, mittels welcher die in der Speichereinheit 18 abgelegten Daten erfassbar sind. Die in der Speichereinheit 18 abgelegten Daten sind in einen prozentualen Wert überführt, wobei der prozentuale Wert der Position der Funktionseinheit 12 in der Sitzschiene 16 bezogen auf eine absolute Länge der Sitzschiene 16 entspricht. Eine dem ersten Kraftfahrzeug 14 zugeordnete Flecheneinrichtung 22 berechnet aus dem prozentualen Wert einen absoluten Wert, welcher der absoluten Position der Funktionseinheit 12 in der Sitzschiene 16 entspricht.

Eine Steuereinrichtung 24 überführt die Funktionseinheit 12 in die dem absoluten Wert entsprechende Einstellung, sofern die aktuelle Position der Funktionseinheit 12 in der Sitzschiene 16 nicht den auf der Speichereinheit 18 abgelegten Daten entspricht.

Fig. 2 zeigt stark schematisiert die Sitzschiene 16 des ersten Kraftfahrzeugs 14. Ein vorderes Ende 26 der Sitzschiene 16 stellt einen Bezugspunkt dar, auf welchen Verstellpositionen des Fahrzeugsitzes beziehbar sind. In dem vorliegenden Ausführungsbeispiels des ersten Kraftfahrzeugs 14 ist ein hinteres Ende 28 der Sitzschiene 16 340 mm von dem vorderen Ende 26 der Sitzschiene 16 entfernt. Eine zweite Sitzschiene 30 eines zweiten Kraftfahrzeugs 32 ist in Fig. 2 ebenfalls schematisch dargestellt. Ein vorderes Ende 34 der zweiten Sitzschiene 30 weist in dem zweiten Kraftfahrzeug 32 eine andere absolute Position auf, als das vordere Ende 26 der Sitzschiene 16 des ersten Kraftfahrzeugs 14. Ein hinteres Ende 36 der zweiten Sitzschiene 30 weist zu dem vorderen Ende 34 einen Abstand von 300 mm auf. Eine erste Verstellposition 38, welche einer Einstellung der Funktionseinheit 12, also des Fahrzeugsitzes, des ersten Kraftfahrzeugs 14 entspricht, kann beispielsweise einen Abstand von 170 mm zu dem vorderen Ende 26 der Sitzschiene 16 haben. Der prozentuale Wert der ersten Verstollposition 38 der Funktionseinheit 12 liegt somit bei 50 % der absoluten Länge der Sitzschiene 16.

Beim Übertragen der ersten Verstellposition 38 von dem ersten Kraftfahrzeug 14 auf das zweite Kraftfahrzeug 32 wird der prozentuale Wert von 50 % mittels der Recheneinrichtung 22 des zweiten Kraftfahrzeugs 32 umgerechnet. Der prozentuale Wert von 50 % ist zum Übertragen der Einstellung von dem ersten Kraftfahrzeug 14 auf das zweite Kraftfahrzeug 32 auf der Speichereinheit 18, beispielsweise auf dem Fahrzeugschlüssel, abgelegt. Die Recheneinrichtung 22 überführt den prozentualen Wert von 50 % in den absoluten Wert von 150 mm, also von 50 % der absoluten Länge von 300 mm der zweiten Sitzschiene 30.

Eine zweite Verstellposition 40, welche einer Einstellung der Funktionseinheit 12 eines größeren Fahrzeuginsassen entsprechen kann, weist vorliegend einen Abstand von 323 mm zum vorderen Ende 26 der Sitzschiene 16 in dem ersten Kraftfahrzeug 14 auf. Dieser Abstand von 323 mm entspricht einem prozentualen Wert von 95 % der absoluten Länge der Sitzschiene 16. Der absolute Wert von 323 mm als Abstand zu dem vorderen Ende 34 der zweiten Sitzschiene 30 in dem zweiten Kraftfahrzeug 32 wäre in dem zweiten Kraftfahrzeug 32 nicht einstellbar, da die Gesamtlänge der zweiten Sitzschiene 30 lediglich 300 mm beträgt. Da die zum Überführen der Einstellung des ersten Kraftfahrzeugs 14 auf das zweite Kraftfahrzeug 32 verwendeten Daten auf der Speichereinheit 18 als prozentualer Wert von 95 % vorliegen, ist die zweite Verstellposition 40 mittels des vorliegend beschriebenen Verfahrens auf das zweite Kraftfahrzeug 32 übertragbar. Die zweite Verstellposition 40 entspricht in dem zweiten Kraftfahrzeug 32 einem absoluten Abstand der zweiten Verstellposition 40 zu dem vorderen Ende 34 der zweiten Sitzschiene 30 von 285 mm.

Durch das Überführen der Verstellpositionen 38, 40 in den prozentualen Wert mittels der Recheneinrichtung 22 ist ein Übertragen der Position der Funktionseinheit 12 von dem ersten Kraftfahrzeug 14 in das zweite Kraftfahrzeug 32 unabhängig von der absoluten Länge der Sitzschiene 16, 30 ermöglicht.

Das erste Kraftfahrzeug 14 und das zweite Kraftfahrzeug 32 können vom selben Fahrzeugtyp sein, oder jeweils unterschiedlichen Fahrzeugtypen entsprechen. Selbst bei Kraftfahrzeugen desselben Kraftfahrzeugtyps derselben Marke können beispielsweise Sitzschienen 16, 30 unterschiedliche Abmessungen aufweisen aufgrund von Abweichungen der absoluten Lage von Schweißpunkten und/oder Verschraubungspunkten, von Toleranzen der Karosserie des Kraftfahrzeugs 14, 32 und/oder aufgrund von Pertigungstoieranzen bei der Fertigung der Sitzschienen 16, 30. Unterschiede bei Abmessungen von Sitzschienen 16, 30 unterschiedlicher Fahrzeugtypen derselben Marke können von besonders großer Bedeutung sein.

Das vorliegend beschriebene Verfahren zum Übertragen von Einstellungen von Funktionseinheiten 12 ist zum Übertragen von Positionen des Fahrzeugssitzes, eines Innen- und/oder Außenspiegels, einer Lenksäule, einer Kopfstütze, einer Beleuchtungsintensität einer lnstrumentenbeleuchtung, einer Getriebeeinstellung sowie eines Energiemanagemenle einer Verbrennungskraftmaschine geeignet. Ebenso können selbstverständlich Einstellungen einer Heizungs- und/oder Klimaanlage, eines Autoradios, eines Autotelefons, eines Navigationssystems oder dergleichen übertragen werden, wobei hierbei auf der Speichereinheit 18 absolute Werte für beispielsweise eine einzustellende Temperatur der Klimaanlage und/oder einer Fahrgeschwindigkeit, bei deren Überschreiten ein Warnsignal an einen Fahrzeuginsassen übermittelt werden soll, auf der Speichereinheit 18 abgelegt sind.

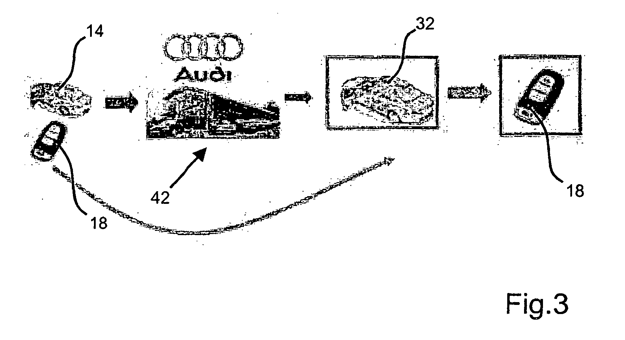

Fig. 3 veranschaulicht das Verfahren zum Übertragen von Einstellungen der Funktionseinheiten 12 des ersten Kraftfahrzeugs 14 auf das zweite Kraftfahrzeug 32. Die Speichereinheit 18, welche vorliegend als Fahrzeugschlüssel des ersten Kraftfahrzeugs 14 ausgebildet ist, enthält die Daten, welche mit den Einstellungen der Funktionseinheiten 12 des ersten Kraftfahrzeugs 14 korreliert sind. Bei einem Händler 42 wird von einem Kunden das zweite Kraftfahrzeug 32 erworben. Die Erfassungseinheit 20 zum Erfassen der auf der Speichereinheit 18 abgelegten Daten kann in einem elektronischen Zündschloss des zweiten Kraftfahrzeugs 32 angeordnet sein.

Hierbei ist das elektronisch Zündschloss des zweiten Kraftfahrzeugs 32 so ausgelegt, dass es die Speichereinheit 18, also beispielsweise den Fahrzeugschlüssel, des ersten Kraftfahrzeugs 14 aufnehmen kann. Alternativ können auch andere geeignete Methoden einer Erfassung der Daten von der Speichereinheit 18 des ersten Kraftfahrzeugs 14 mittels der Erfassungseinheit 20 des zweiten Kraftfahrzeugs 32 vorgesehen sein, beilspielsweise mittels einer kontaktlosen Übertragung der Daten.

Die Daten mit den Einstellungen der Funktionseinheit 12 des ersten Kraftfahrzeugs 14 werden von der Erfassungseinheit 20 des zweiten Kraftfahrzeugs 32 erfasst. Die Recheneinrichtung 22 des zweiten Kraftfahrzeugs 32 überführt die als prozentuale Werte vorliegenden Daten von der Speichereinheit 18 in absolute Werte, welche mittels der Steuereinrichtung 24 des zweiten Kraftfahrzeugs 32 in dem zweiten Kraftfahrzeug 32 eingestellt werden.

Mittels der als Lese- und Schreibeinrichtung ausgebildeten Erfassungseinheit 22 können die Daten von der Speichereinheit 18 des ersten Kraftfahrzeugs 14 auf die Speichereinheit 18 des zweiten Kraftfahrzeugs 32 übertragen werden. Die Speichereinheit 18 des zweiten Kraftfahrzeugs 32 ist vorliegend ebenfalls im Fahrzeugschlüssel des zweiten Kraftfahrzeugs 32 integriert.

Als Lese- und/oder Schreibeinrichtung für die auf der Speichereinheit 18 abgelegten Daten kann anstelle der in dem elektronischen Zündschloss des zweiten Kraftfahrzeugs 32 vorgesehenen Erfassungseinheit 20 auch eine externe Lese- und/oder Schreibeinrichtung genutzt werden, welche Daten aus dem Fahrzeugschlüssel auslesen und/oder Daten auf den Fahrzeugschlüssel übertragen kann.

Mittels der Lese- und/oder Schreibeinrichtung werden die Daten von der Speichereinheit 18 für das erste Kraftfahrzeug 14 auf die Speichereinheit 18 für das zweite Kraftfahrzeug 32 übertragen. Anschließenc werden die mit den Einstellungen der Funktionseinheiten 12 korrelierten Daten von der Speichereinheit 18 für das zweite Kraftfahrzeug 32 mittels der Erfassungseinheit 20 des zweiten Kraftfahrzeugs 32 erfasst. Mittels der Steuereinrich-tung 24 des zweiten Kraftfahrzeugs 32 werden die mit den auf der Speichereinheit 18 abgelegten Daten korrelierten Einstellungen der Funktionseinheiten 12 des Kraftfahrzeugs 32 vorgenommen.

## Patentansprüche

1. Kraftfahrzeug mit
- einer Erfassungseinheit (20) zum Erfassen und zum Übertragen von Daten einer Speichereinheit (18), welche mit einer Einstellung wenigstens einer Funktionseinheit (12) des Kraftfahrzeugs (14, 32) korreliert sind,
- einer Steuereinrichtung (24) zum Überführen der wenigstens einen Funktionseinheit (12) in die den mittels der Erfassungseinheit (20) übertragenen Daten entsprechende Einstellung und
- einer Recheneinrichtung (22), mittels welcher die mit der Einstellung der Funktionseinheit (12) eines ersten Kraftfahrzeugs (14) korrelierten Daten in die mit der Einstellung der Funktionseinheit (12) eines zweiten Kraftfahrzeugs (32) korrelierten Daten überführbar sind,
wobei die Recheneinrichtung (22) zum Berechnen eines prozentualen Wertes aus den mit der Einstellung der wenigstens einen Funktionseinheit (12) des ersten Kraftfahrzeugs (14) korrelierten Daten ausgelegt ist, **dadurch gekennzeichnet,**
**dass** eine Erkennungseinrichtung vorgesehen ist, mittels welcher eine Zuordenbarkeit der auf der Speichereinheit (18) abgelegten Daten zu einem Fahrer oder Beifahrer feststellbar ist.

2. Kraftfahrzeug nach Anspruch 2,
**dadurch gekennzeichnet,**
**dass** die Erfassungseinheit (20) als Lese- und/oder Schreibeinrichtung für die auf der Speichereinheit (18), insbesondere auf einem Fahrzeugschlüssel, speicherbaren und mit der Einstellung der wenigstens einen Funktionseinheit (12) korrelierten Daten ausgebildet ist.

3. Kraftfahrzeug nach Anspruch 1 oder 2,
**dadurch gekennzeichnet,**
**dass** die Erfassungseinheit (20) und/oder die Recheneinrichtung (22) in ein elektronisches Zündschloss des Kraftfahrzeugs (14, 32) integriert ist.

4. Kraftfahrzeug nach einem der Ansprüche 1 bis 3,
**dadurch gekennzeichnet,**
**dass** die Recheneinrichtung (22) in die Steuereinrichtung (24) integriert ist.

5. Kraftfahrzeug nach einem der Ansprüche 1 bis 4,
**dadurch gekennzeichnet,**
**dass** die Erfassungseinheit (20) zum kontaktlosen Erfassen der mit der Einstellung der wenigstens einen Funktionseinheit (12) korrelierten Daten ausgelegt ist.

6. System zum Einstellen wenigstens einer Funktionseinheit (12) eines Kraftfahrzeugs (14, 32), umfassend
- eine Speichereinheit (18) zum Speichern von mit einer Einstellung der wenigstens einen Funktionseinheit (12) korrelierten Daten,
- eine Erfassungseinheit (20) zum Erfassen und zum Übertragen der Daten,
- eine Steuereinrichtung (24) zum Überführen der wenigstens einen Funktionseinheit (12) in die den mittels der Erfassungseinheit (20) übertragenen Daten entsprechende Einstellung und
- eine Recheneinrichtung (22), mittels welcher die mit der Einstellung der Funktionseinheit (12) eines ersten Kraftfahrzeugs (14) korrelierten Daten in die mit der Einstellung der Funktionseinheit (12) eines zweiten Kraftfahrzeugs (32) korrelierten Daten überführbar sind, wobei die Recheneinrichtung (22) zum Berechnen eines prozentualen Wertes aus den mit der Einstellung der wenigstens einen Funktionseinheit (12) des ersten Kraftfahrzeugs (14) korrelierten Daten ausgelegt ist, **dadurch gekennzeichnet,**
**dass** eine Erkennungseinrichtung vorgesehen ist, mittels welcher eine Zuordenbarkeit der auf der Speichereinheit (18) abgelegten Daten zu einem Fahrer oder Beifahrer feststellbar ist.

7. Verfahren zum Einstellen wenigstens einer Funktionseinheit (12) eines Kraftfahrzeugs (14, 32) mit folgenden Schritten:
a) Bereitstellen einer Speichereinheit (18) zum Speichern von mit einer Einstellung der wenigstens einen Funktionseinheit (12) korrelierenden Daten;
b) Berechnen eines prozentualen Wertes aus den mit der Einstellung der wenigstens einen Funktionseinheit (12) korrelierenden Daten eines ersten Kraftfahrzeugs (14) mittels einer Recheneinrichtung (22);
c) Zuordnen der auf der Speichereinheit (18) abgelegten Daten zu einem Fahrer oder Beifahrer mittels einer Erkennungseinrichtung;
d) Überführen der mit der Einstellung der Funktionseinheit (12) des ersten Kraftfahrzeugs (14) korrelierenden Daten in die mit der Einstellung der Funktionseinheit (12) eines zweiten Kraftfahrzeugs (32) korrelierenden Daten;
e) Erfassen der gemäß Schritt d) überführten Daten mittels einer Erfassungseinheit (20) und
f) Übertragen der gemäß Schritt e) erfassten Daten an eine Steuereinrichtung (24), welche die wenigstens eine Funktionseinheit (12) des zweiten Kraftfahrzeugs (32) entsprechend den erfassten Daten einstellt.

## Claims

1. Motor vehicle comprising
- an acquisition unit (20) for acquiring and transmitting data from a storage unit (18) which are correlated with a setting of at least one functional unit (12) of the motor vehicle (14, 32),
- a control device (24) for bringing the at least one functional unit (12) to the setting corresponding to the data transmitted by means of the acquisition unit (20) and
- a computing device (22), by means of which the data correlated with the setting of the functional unit (12) of a first motor vehicle (14) can be converted into the data correlated with the setting of the functional unit (12) of a second motor vehicle (32),
the computing device (22) being configured to compute a percentage value from the data correlated with the setting of the at least one functional unit (12) of the first motor vehicle (14), **characterised in that** a recognition device is provided, by means of which an assignability of the data stored on the storage unit (18) to a driver or passenger can be established.

2. Motor vehicle according to claim 2, **characterised in that** the acquisition unit (20) is designed as a reading and/or writing device for the data which can be stored on the storage unit (18), in particular on a vehicle key, and are correlated with the setting of the at least one functional unit (12).

3. Motor vehicle according to either claim 1 or claim 2, **characterised in that** the acquisition unit (20) and/or the computing device (22) is/are integrated into an electronic ignition lock of the motor vehicle (14, 32).

4. Motor vehicle according to any of claims 1 to 3, **characterised in that** the computing device (22) is integrated into the control device (24).

5. Motor vehicle according to any of claims 1 to 4, **characterised in that** the acquisition unit (20) is configured for contactless acquisition of the data correlated with the setting of the at least one functional unit (12).

6. System for setting at least one functional unit (12) of a motor vehicle (14, 32), comprising
- a storage unit (18) for storing data correlated with a setting of the at least one functional unit (12),
- an acquisition unit (20) for acquiring and transmitting the data,
- a control device (24) for bringing the at least one functional unit (12) to the setting corresponding to the data transmitted by means of the acquisition unit (20) and
- a computing device (22), by means of which the data correlated with the setting of the functional unit (12) of a first motor vehicle (14) can be converted into the data correlated with the setting of the functional unit (12) of a second motor vehicle (32),
the computing device (22) being configured to compute a percentage value from the data correlated with the setting of the at least one functional unit (12) of the first motor vehicle (14), **characterised in that** a recognition device is provided, by means of which an assignability of the data stored on the storage unit (18) to a driver or passenger can be established.

7. Method for setting at least one functional unit (12) of a motor vehicle (14, 32), comprising the following steps:
a) providing a storage unit (18) for storing data correlating with a setting of the at least one functional unit (12);
b) computing a percentage value from the data, correlating with the setting of the at least one functional unit (12), of a first motor vehicle (14) by means of a computing device (22);
c) assigning the data stored on the storage unit (18) to a driver or passenger by means of a recognition device;
d) converting the data correlating with the setting of the functional unit (12) of the first motor vehicle (14) into the data correlating with the setting of the functional unit (12) of a second motor vehicle (32);
e) acquiring the data converted according to step d) by means of an acquisition unit (20) and
f) transmitting the data acquired according to step e) to a control device (24) which sets the at least one functional unit (12) of the second motor vehicle (32) in accordance with the acquired data.

## Revendications

1. Véhicule automobile comprenant :
- une unité d'acquisition (20) pour acquérir et transférer des données à une unité de mémoire (18), lesquelles données sont corrélées à un réglage au moins d'une unité fonctionnelle (12) du véhicule automobile (14, 32),
- un dispositif de commande (24) pour convertir la au moins une unité fonctionnelle (12) au réglage correspondant aux données transférées au moyen de l'unité d'acquisition (20) et
- un dispositif de calcul (22), au moyen duquel on peut convertir les données corrélées au réglage de l'unité fonctionnelle (12) d'un premier véhicule automobile (14) en données corrélées au réglage de l'unité fonctionnelle (12) d'un second véhicule automobile (32),
dans lequel le dispositif de calcul (22) est
dimensionné pour calculer une valeur en pourcentage à partir des données corrélées au réglage de la au moins une unité fonctionnelle (12) du premier véhicule automobile (14),
**caractérisé en ce que** :
il est prévu un dispositif d'identification au moyen
duquel une capacité d'affectation des données stockées sur l'unité de mémoire (18) peut être établie pour un chauffeur ou un convoyeur.

2. Véhicule automobile selon la revendication 2, **caractérisé en ce que**
l'unité d'acquisition (20) est conformée en dispositif
de lecture et/ou d'écriture pour les données mémorisables sur l'unité de mémoire (18), en particulier sur une clé de véhicule, et corrélées au réglage de la au moins une unité fonctionnelle (12).

3. Véhicule automobile selon la revendication 1 ou la
revendication 2,
**caractérisé en ce que**
l'unité d'acquisition (20) et/ou l'unité de
calcul (22) est ou sont intégrées à une serrure de contact électronique du véhicule automobile (14, 32).

4. Véhicule automobile selon l'une quelconque des
revendications 1 à 3,
**caractérisé en ce que**
l'unité de calcul (22) est intégrée au dispositif de
commande (24).

5. Véhicule automobile selon l'une quelconque des
revendications 1 à 4,
**caractérisé en ce que**
l'unité d'acquisition (20) est dimensionnée pour
acquérir sans contact les données corrélées au réglage de la au moins une unité fonctionnelle (12).

6. Système de réglage d'au moins une unité fonctionnelle (12) d'un véhicule automobile (14, 32), comprenant :
- une unité de mémoire (18) pour mémoriser des données corrélées à un réglage de la au moins une unité fonctionnelle (12),
- une unité d'acquisition (20) pour acquérir et transférer les données,
- une unité de commande (24) pour convertir la au moins une unité fonctionnelle (12) au réglage correspondant aux données transférées au moyen de l'unité d'acquisition (20), et
- un dispositif de calcul (22) au moyen duquel on peut convertir les données corrélées au réglage de l'unité fonctionnelle (12) d'un premier véhicule automobile (14) en données corrélées au réglage de l'unité fonctionnelle (12) d'un second véhicule automobile (32),
dans lequel le dispositif de calcul (22) est
dimensionné pour calculer une valeur en pourcentage à partir des données corrélées au réglage de la au moins une unité fonctionnelle (12) du premier véhicule automobile (14),
**caractérisé en ce que** :
il est prévu un dispositif d'identification au moyen
duquel une capacité d'affectation des données stockées sur l'unité de mémoire (18) peut être établie pour un chauffeur ou un convoyeur.

7. Procédé de réglage au moins d'une unité fonctionnelle (12) d'un véhicule automobile (14, 32) comprenant les étapes consistant à :
a) lancer une unité de mémoire (18) pour mémoriser des données corrélées à un réglage de la au moins une unité fonctionnelle (12) ;
b) calculer une valeur en pourcentage à partir des données d'un premier véhicule automobile (14) corrélées au réglage de la au moins une unité fonctionnelle (12) à l'aide d'un dispositif de calcul (22) ;
c) affecter les données stockées sur l'unité de mémoire (18) à un chauffeur ou un convoyeur au moyen d'un dispositif d'identification ;
d) convertir les données corrélées au réglage de l'unité fonctionnelle (12) du premier véhicule automobile (14) en données corrélées au réglage de l'unité fonctionnelle (12) d'un second véhicule automobile (32) ;
e) acquérir les données converties selon l'étape d) au moyen d'un dispositif d'acquisition (20) ; et
f) transférer les données acquises selon l'étape e) à un dispositif de commande (24), qui règle la au moins une unité fonctionnelle (12) du second véhicule automobile (32) en fonction des données acquises.
